# EUROPEAN PATENT APPLICATION

(11) **EP 2 785 098 A1**
(43) Date of publication of application: **01.10.2014**
(21) Application number: 12852083.0
(22) Date of filing: 28.06.2012
(51) Int. Cl.: H04W 24/00

(54) **NETWORK PROBLEM POSITIONING METHOD AND DEVICE BASED ON USER PERCEPTION**

(30) Priority: 25.11.2011 CN 201110382247
(71) Applicant: Huawei Technologies Co., Ltd., Shenzhen, Guangdong 518129 (CN)
(72) Inventor: WANG, Xiufeng, Shenzhen Guangdong 518129 (CN); XU, Zhenglei, Shenzhen Guangdong 518129 (CN); CHEN, Xin, Shenzhen Guangdong 518129 (CN); DENG, Liang, Shenzhen Guangdong 518129 (CN)
(74) Representative: Isarpatent
(86) International application number: PCT/CN2012/077691
(87) International publication number: WO 2013/075487

(57) **Abstract**

The present invention provides a method and an apparatus for network problem location based on subscriber perception. A server firstly receives and parses a call history record CHR log sent by a network management system, then determines, according to a parsing result, whether a call of a subscriber is a key quality indicator KQI exception event, and locates a location and a cause of the KQI exception event. The technical solutions provided in the present invention are capable of finding a network problem and locating the network problem from the perspective of subscriber perception.

## Description

This application claims priority to Chinese Patent Application No. 201110382247.0, filed with the Chinese Patent Office on November 25, 2011, and entitled "METHOD AND APPARATUS FOR NETWORK PROBLEM LOCATION BASED ON SUBSCRIBER PERCEPTION", which is incorporated herein by reference in its entirety.

### FIELD OF THE INVENTION

The present invention relates to the field of radio communications technologies, and in particular, to a method and an apparatus for network problem location based on subscriber perception.

### BACKGROUND OF THE INVENTION

With the rapid development of networks, the capability of improving subscriber perception and decreasing a churn rate and a complaint rate while ensuring overall normal network indicators has become part of the core competences of mature telecommunication operators. Conventional KPIs (Key Performance Indicator, key performance indicator) based on network elements cannot fully reflect experience of subscribers, and therefore, subscriber perception becomes as important as KPIs in fierce network competition. If network conditions are detected simply based on network KPIs, when the overall network indicators are normal, some subscribers experiencing poor voice quality and having poor perception are not easily found for a long time, which finally results in subscriber complaints or service deactivation.

Currently, most of the telecommunication operators lack effective evaluation and management methods for objective network service quality and subscribers' subjective perception. Therefore, a set of methods based on objective service quality are required to effectively evaluate subscribers' subjective perception, identify subscribers having extremely poor perception, locate basic causes resulting in the poor perception and thereby perform effective closed-loop processing.

### SUMMARY OF THE INVENTION

The present invention provides a method for network problem location based on subscriber perception, which may solve the problem in the prior art that there is no effective network problem location method in the perspective of objective service quality of a network and subscribers' subjective perception. The method includes:
receiving and parsing, by a server, a call history record CHR log sent by a network management system;
determining, according to a parsing result, whether a call of a subscriber is a key quality indicator KQI exception event; and
locating a location and a cause of the occurrence of the KQI exception event.

The present invention further provides an apparatus for network problem location based on subscriber perception, including:
a receiving unit, configured to receive, by a server, a call history record CHR log sent by a network management system;
a parsing unit, configured to parse the CHR log;
a determining unit, configured to determine, according to a parsing result, whether a call of a subscriber is a KQI exception event; and
a locating unit, configured to locate a location and a cause of the KQI exception event.

With the method and apparatus for network problem location based on subscriber perception provided in the present invention, a server firstly receives and parses a call history record CHR log sent by a network management system, then determines, according to a parsing result, whether a call of a subscriber is a KQI exception event, and locates a location and a cause of the KQI exception event. The technical solutions provided in the present invention are capable of finding a network problem and effectively locating the network problem from the perspective of subscriber perception.

### BRIEF DESCRIPTION OF THE DRAWINGS

FIG. 1 is a flowchart of a method for network problem location based on subscriber perception provided in an embodiment of the present invention;
FIG. 2 is a diagram of key indicators in a CHR log from the perspective of four dimensions of a coverage category, an access category, a retention category, and a voice quality category provided in an embodiment of the present invention;

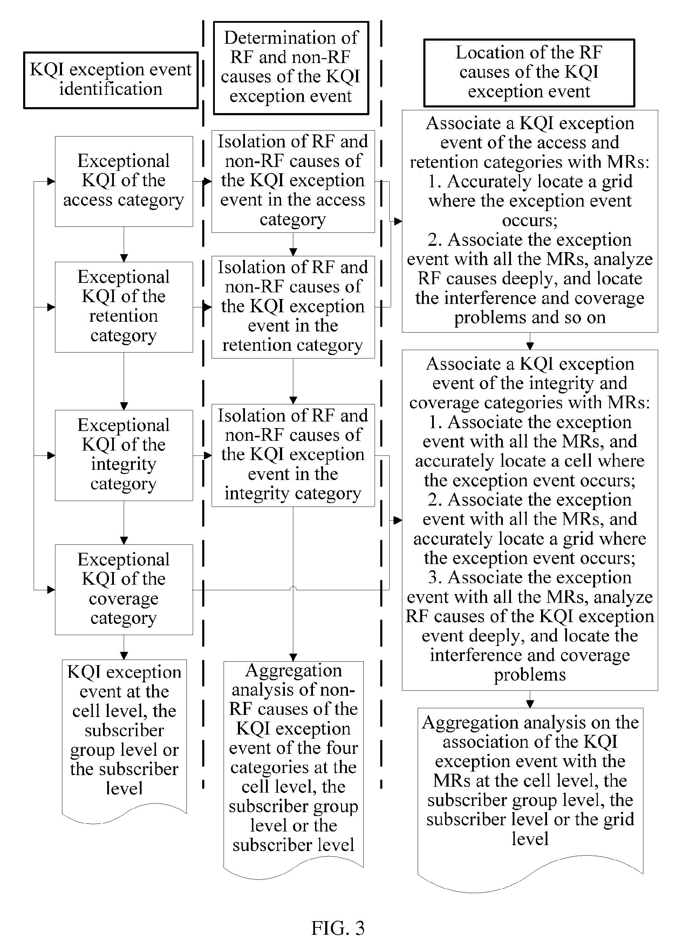

FIG. 3 is a schematic diagram of the method for network problem location based on subscriber perception provided in an embodiment of the present invention; and
FIG. 4 is a schematic structural diagram of an apparatus for network problem location based on subscriber perception provided in an embodiment of the present invention.

### DETAILED DESCRIPTION OF THE EMBODIMENTS

To make persons skilled in the art better understand the technical solutions of the present invention, the following clearly and completely describes the technical solutions according to the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

The technologies described in the document are applicable to all kinds of radio communications systems, such as existing 2G and 3G communications systems and next generation communications systems. For example, the present invention is applicable to wireless networks such as UMTS (Universal Mobile Telecommunications System, universal mobile telecommunications system), GSM (Global System for Mobile communications, global system for mobile communications), GPRS (General Packet Radio Service, general packet radio service), CDMA2000 (Code Division Multiple Access 2000, code division multiple access 2000), TD-SCDMA (Time Division-Synchronous Code Division Multiple Access, time division-synchronous code division multiple access), LTE (Long Term Evolution, long term evolution), WLAN (Wireless Local Area Network, wireless local area network)/WiFi (Wireless Fidelity, wireless fidelity) and WiMAX (Worldwide Interoperability for Microwave Access, worldwide interoperability for microwave access).

Further, the terms "system" and "network" in this document can always be exchanged for use in this document. The term "and/or" in this document is only an association relationship for describing the associated objects, and indicates that three relationships may exist, for example, A and/or B may represent the following three cases: only A exists, both A and B exist, and only B exists.

There are two methods for network problem location in the prior art. A first method is based on KPI indicators of the whole network, in which possible network problems are filtered and located one by one by analyzing equipment logs and signaling data in combination with test methods such as DT/CQT (Drive Test, drive test/Call Quality Test, call quality test). However, the method just reflects an "average value of the whole network", lacks sufficient focus on service quality of a single subscriber, and lacks detection and assurance measures for VIP (Very Important Person, very important person) subscribers, so that subscribers with poor perception cannot be detected in advance and have their perception improved, which likely leads to service deactivation or complaints from the subscribers and decreases the network competence.

In a second method, collected KPIs related to service performance are mapped as service quality KQIs (Key Quality Indicator, key quality indicator) in a certain manner and further mapped as indicators reflecting the whole subscriber experience. By monitoring the KQIs obtained through mapping, when the KQI indicators decrease to thresholds, the KQI indicators are mapped as KPIs for problem analysis. However, the analysis is still based on KPIs in the method, and reflects service quality of the whole network. Therefore, the analysis efficiency is low and lacks sufficient focus on the service quality of subscribers.

For the foregoing disadvantages, an embodiment of the present invention provides a method for network problem location based on subscriber perception, including:
receiving and parsing, by a server, a call history record CHR log sent by a network management system;
determining, according to a parsing result, whether a call of a subscriber is a key quality indicator KQI exception event; and
locating a location and a cause of the occurrence of the KQI exception event.

The present invention is further descried with reference to the accompanying drawings and specific embodiments in the following.

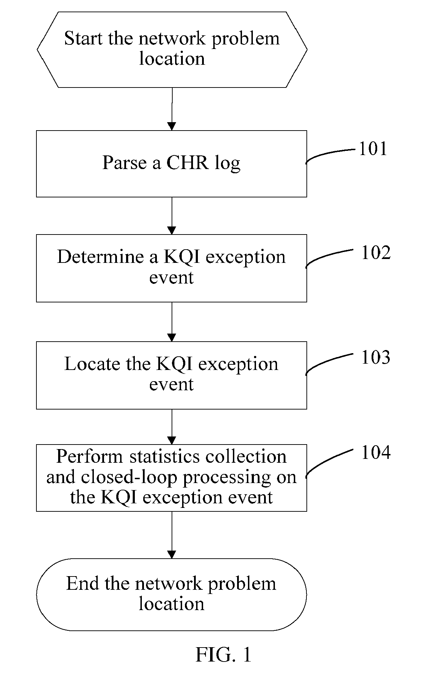

As shown in FIG. 1, a method for identifying a subscriber with extremely poor perception in a mobile communications network according to this embodiment includes the following steps.
Step 101: A server receives and parses a CHR (Call History Record, call history record) log sent by a network management system.

The network management system records CHR logs of all calls based on call signaling. The CHR logs are used to record history information of the calls, and analyze signaling and a cause of a call exception, such as a timestamp of a key signaling point, a type and a cause of a release, handover information (handover causes, occupied resources before and after a handover), and measurement information. In this step, the network management system sends the recorded CHR logs to the server, and the server parses the CHR logs.

In this embodiment, the parsing is performed on CHR logs of single subscribers in all base station controllers BSCs or part of the BSCs in the whole network. A BSC (base station controller, base station controller) is a connection point between a base transceiver station and a mobile switching center, and is a network unit that is mainly responsible for managing radio network resources, managing a cell material, controlling power, location, handovers and so on. Multiple BSCs are deployed in a mobile communications network, and each BSC manages mobile communications of multiple subscribers. The management range of each BSC may be set by a telecommunication operator according to factors such as analysis objectives, where the telecommunication operator may select CHR logs of single subscribers in all BSCs in the whole network or select CHR logs of single subscribers only in part of the BSCs according to actual situations. In this embodiment, CHR logs of single subscribers in all BSCs in the whole network are selected to locate network problems and perform optimization for the network problems in the whole network.

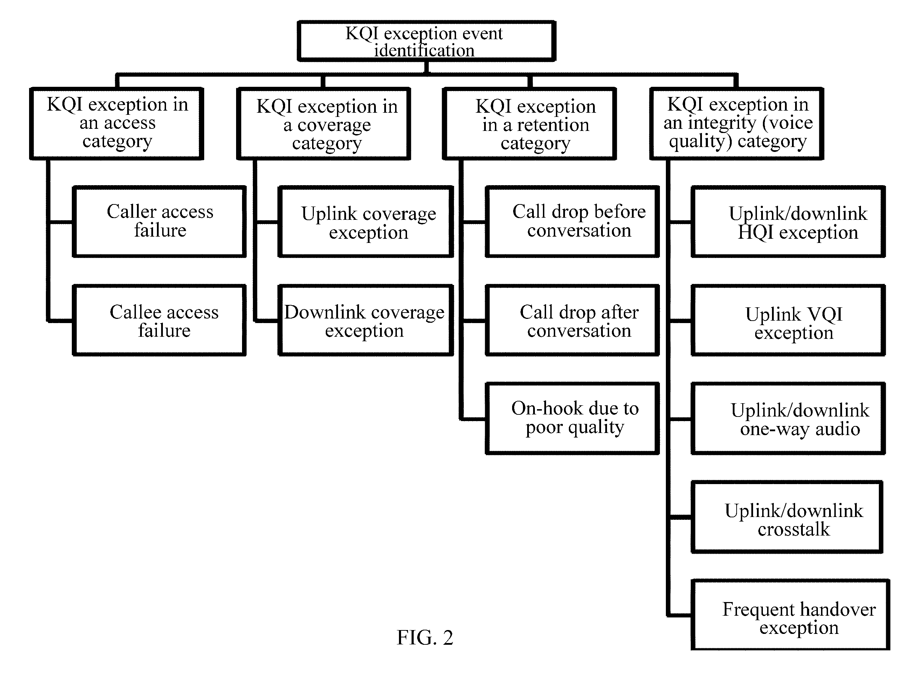

The server extracts and analyzes key indicators of CHR logs of a period from the perspective of four dimensions of a coverage category, an access category, a retention category, and a voice quality category. The focused key indicators in the four dimensions are shown in FIG. 2.

The key indicators in the dimension of the coverage category include an uplink coverage exception and a downlink coverage exception:
the uplink coverage exception refers to an exception in which an access level of a call is less than a set uplink level threshold, or an average uplink reception level of the call is less than a set uplink level threshold; and
the downlink coverage exception refers to an exception in which an average downlink reception level of a call is less than a set downlink level threshold.

In the dimension of the coverage category according to this embodiment, the uplink level threshold may be set to -100 dBm, and the downlink level threshold may be set to -90 dBm, both of which are experience values summarized according to actual situations in this embodiment of the present invention.

The key indicators in the dimension of the access category include a caller access failure and a callee access failure:
the caller access failure refers to an access failure not resulting from subscriber behavior or a peer end cause, in which a call of a caller does not receive an ALERTING message; and
the callee access failure refers to an access failure not resulting from subscriber behavior or a peer end cause, in which a call of a callee does not receive an ALERTING message.

The key indicators in the dimension of the retention category include a call drop before a conversation, a call drop after a conversation, and an on-hook due to poor quality:
the call drop before a conversation refers to a call drop in which a call set-up result is "disconnect before connect acknowledge" and the call set-up failure is not caused by a subscriber behavior exception;
the call drop after a conversation refers to a call drop in which a call set-up is successful, a call completion result is receiving a DISCONNECT message, and the failure is not resulting from subscriber behavior or a peer end cause; and
the on-hook due to poor quality refers to an on-hook in which the call is completed normally in a signaling plane, but there is no measurement report within N seconds before a channel is released, or average uplink/downlink quality is greater than a set reception quality threshold within the last M seconds, and this kind of calls usually occur when a subscriber hangs up due to unbearable poor voice quality.

In the dimension of the retention category according to this embodiment, the N may be set to 7 seconds, and the M may be set to 10 seconds. The reception quality threshold may vary with different standards of terminals; and if the standard of a terminal is GSM in this embodiment, the reception quality threshold may be set to 6 or 7. The values are all experience values summarized according to actual situations in the embodiment of the present invention.

The key indicators in the dimension of the voice quality category include an uplink/downlink HQI (High Quality Index, high quality index) exception, an uplink VQI (Voice Quality Indicator, voice quality indicator) exception, and an uplink/downlink one-way audio, an uplink/downlink crosstalk, and a frequent handover exception:
the uplink/downlink HQI exception refers to an exception in which a proportion of MRs with high uplink/downlink reception quality of a call is lower than a set proportion threshold of good reception quality;
the uplink VQI exception refers to an exception in which an average uplink VQI of a call is lower than a set low VQI threshold, or a proportion of a duration with excessively low uplink VQI to the total call duration is higher than a set proportion threshold of a low VQI duration;
the uplink/downlink one-way audio refers to an exception in which a one-way call record of a call exists in the CHR;
the uplink/downlink crosstalk refers to an exception in which a crosstalk call record of a call exists in the CHR; and
the frequent handover exception refers to an exception in which the number of handover times is great and exceeds a set threshold of the number of frequent handover times in a conversation of a call, and an average interval of handovers is short and less than a set threshold of the minimum interval of frequent handovers; in this case, a call is considered as a call with frequent handovers.

In the dimension of the voice quality category according to this embodiment, both the HQI and VQI are based on a measurement report MR (Measurement Report, measurement report) reported by a base station, and reception quality refers to conversation quality evaluated by calculating a BER (Bit Error Rate, bit error rate) during radio transmission. The measurement of the reception quality is based on the BER; therefore, an explicit and nearly linear relationship exists between the reception quality and the BER. The specific mapping relationship is shown in the following Table 1:

**Table 1**

| **Reception Quality** | **BER Range** |
|---|---|
| 0 | BER<0.2% |
| 1 | 0.2<=BER<0.4% |
| 2 | 0.4<=BER<0.8% |
| 3 | 0.8<=BER<1.6% |
| 4 | 1.6<=BER<3.2% |
| 5 | 3.2<=BER<6.4% |
| 6 | 6.4<=BER<12.84% |
| 7 | BER>=12.8% |

The BER is a probability that bits are falsely transmitted during data transmission, and is an average statistic value for a relatively long period. The HQI is a proportion of high-quality reception in a call, and in this embodiment, the HQI may be a proportion of the number of MRs with a reception quality of 0∼5 to the number of MRs with a reception quality of 0∼7 in a call. The VQI is a method for evaluating voice quality by using parameters. By using the VQI, information about subscriber air interface quality is collected automatically over the network, and conversation voice quality of a subscriber who is making a call currently is evaluated through algorithm fitting. The VQI describes a mapping relationship between radio transmission performance and voice quality. The mapping relationship between the radio performance and the voice quality is established by scoring the voice quality by using the VQI technology, and effects of the radio performance on the voice quality may be intuitively measured and determined during network optimization. In the scoring criterion of the VQI, scores of the voice quality ranges from 0 to 5 points, in which the higher the score is, the better the voice quality is.

A criterion may be set for high uplink/downlink reception quality. In the embodiment, a call with uplink/downlink reception quality ranging from 0 to 5 may be set as a call with high uplink/downlink reception quality, and a proportion of the number of calls with the uplink/downlink reception quality ranging from 0 to 5 to the number of calls with the uplink/downlink reception quality ranging from 0 to 7 may be set as a proportion with high uplink/downlink reception quality. The proportion threshold of good reception quality may be set to 0.7. The low VQI threshold may vary with different standards of terminals; and if the standard of a terminal is GSM, the low VQI threshold may be set to 2.7 in this embodiment. The proportion threshold of the low VQI duration may be set to 0.1. The threshold of the number of frequent handover times may be set to 4. The threshold of the minimum interval of frequent handovers may be set to 10s. The values are all experience values summarized according to actual situations in the embodiment of the present invention.
Step 102: Determine, according to a parsing result, whether a call of a subscriber is a KQI exception event.

The CHR log is analyzed according to the key indicators in the foregoing four dimensions, and a call of a subscriber that accords with any key indicator of the four dimensions is determined as a KQI exception event. For example, if a call drops before a conversation, the call is a KQI exception event; and if a call undergoes a frequent handover exception and is hung up due to poor quality, the call is a KQI exception event.

During the solving of a network problem according to this embodiment, a KQI exception event determination is performed for each of calls of a subscriber based on the foregoing key indicators, thereby fully focusing on subjective perception of the subscriber.
Step 103: Locate a location and a cause of the KQI exception event.

Objectives of locating a KQI exception event are as follows: firstly, locating a location where the KQI exception event occurs, that is, locating, according to an analysis objective, a cell or a geographic longitude and latitude where the KQI exception event occurs; and secondly, locating a cause for which the KQI exception event occurs.

The locating of the KQI exception event includes three steps:

### 1. Locate a location where the KQI exception event occurs.

To locate a location where the KQI exception event occurs, an analysis associating the KQI exception event with an MR is required. According to indicator values of the MR of the KQI exception event in each cell and each region, an accurate determination is implemented on the cell or region where the exception event occurs. This function is of vital necessity for a KQI exception event in the voice quality and coverage categories. The specific determination method is as follows:
in the dimensions of the access category and the retention category, determining that the KQI exception event occurs in a call release cell;
in the dimension of the coverage category, if the KQI exception event is an uplink coverage exception, analyzing MR information in all cells where the KQI exception event occurs, in which, if the average uplink reception level of the KQI exception event in a cell is less than the set uplink level threshold, it is considered that an uplink coverage exception occurs in the cell during the KQI exception event;
if the KQI exception event is a downlink coverage exception, analyzing MR information in all cells where the KQI exception event occurs, in which if the average downlink reception level of the KQI exception event in a cell is less than the set downlink level threshold, it is considered that the KQI exception event, that is, a downlink coverage exception, occurs in the cell;
in the dimension of the voice quality category, if the KQI exception event is an uplink/downlink one-way audio or an uplink/downlink crosstalk, that the KQI exception event occurs in a call release cell;
if the KQI exception event is an uplink/downlink HQI exception, analyzing MR information in all cells where the KQI exception event occurs, in which, for the KQI exception event, if the proportion of MRs with high uplink/downlink reception quality in a cell is lower than the set proportion threshold of good reception quality, it is considered that an uplink/downlink HQI exception occurs in the cell during the KQI exception event; and
if the KQI exception event is an uplink VQI exception, analyzing MR information in all cells where the KQI exception event occurs, in which if the average uplink VQI of the KQI exception event in a cell is lower than the set low VQI threshold, or the proportion of a duration with excessively low uplink VQI to the duration of a call in the cell is higher than the set proportion threshold of a low VQI duration, it is considered that an uplink VQI exception occurs in the cell during the KQI exception event.

Furthermore, the grid-level (geographic) locating of the KQI exception event may be implemented, that is, a geographic longitude and latitude where the KQI exception event occurs are determined. That is, a propagation model of a radio network is corrected by using drive test data, level distribution of signals in a location area is calculated by using the corrected propagation model, a reception level database based on prediction is established according to a calculation result, reception level data is searched according to a cell in the MR of the KQI exception event and the intensity of reception signals, and then geographic longitude and latitude information of the KQI exception event is read.

### 2. Determine a cause type of the KQI exception event, and differentiate an air interface cause and a non-air interface cause.

The determination of the cause type of the KQI exception event and the differentiation of the air interface cause and the non-air interface cause assist a telecommunication operator to specifically locate a network problem and perform optimization for the network problem, in which:

the non-air interface cause of the KQI exception event in the dimension of the access category includes: a failure due to an equipment fault, congestion of air interface resources, a failure due to a core network or peer end cause, an authentication failure, and an encryption failure;
the non-air interface cause of the KQI exception event in the dimension of the retention category includes: a cause of an equipment fault, a core network cause, and a peer end cause;
the non-air interface cause of the KQI exception event in the dimension of the voice quality category includes: a cause of an equipment fault; and
there is no non-air interface cause for the KQI exception event in the dimension of the coverage category.

A specific determination method is as follows:
determining a cause of the KQI exception event in the dimension of the access category and the dimension of the retention category: determination is performed based on a fail cause (Fail Cause) of a call set-up failure or a call release failure stipulated in a protocol reported in the signaling output in the CHR, for example, if the type of the call release failure is "Drop call on traffic channel", "out BSC handover drop", "inner BSC handover drop" or "BSC release", and a cause value of the failure is "radio interface failure" or "radio link failure", it is determined that the KQI exception event occurs due to an air interface cause; while for the foregoing types of the call release failure, if the cause value of the failure is "equipment failure", it is determined that the KQI exception event occurs due to an equipment cause;
determining a cause of the KQI exception event in the dimension of the coverage category: there is no non-air interface cause for the KQI exception event in the dimension of the coverage category; and
determining a cause of the KQI exception event in the dimension of the voice quality category: the cause of the KQI exception event is determined according to the type of the KQI exception event in the dimension, for example, if the KQI exception event is a one-way audio or a crosstalk detected by equipment, it is determined that the KQI exception event occurs due to an equipment cause; while if the KQI exception event is an uplink/downlink HQI exception, an uplink VQI exception or a frequent handover exception, it is determined that the KQI exception event occurs due to an air interface cause.

### 3. Locate the air interface cause of the KQI exception event.

The locating the air interface cause of the KQI exception event specifically includes:
analyzing all MR indicators of the KQI exception event, and determining an air interface cause of the KQI exception event according to a determination result. The MR indicators include: a weak downlink coverage MR, a weak uplink coverage MR, a downlink interference MR, an uplink interference MR, a poor downlink quality MR, and a poor uplink quality MR. Correspondingly, types of the air interface cause of the KQI exception event in this embodiment include: weak downlink coverage, weak uplink coverage, downlink interference, uplink interference, poor downlink quality, and poor uplink quality, that is, an air interface cause corresponding to the weak uplink coverage MR is the weak uplink coverage, an air interface cause corresponding to the downlink interference MR is the downlink interference, an air interface cause corresponding to the uplink interference MR is the uplink interference, an air interface cause corresponding to the poor downlink quality MR is the poor downlink quality, and an air interface cause corresponding to the poor uplink quality MR is the poor uplink quality.

The weak downlink coverage MR indicates that a reception level value of a downlink service cell is less than or equal to a set reception level threshold after power control compensation, and a reception level of the strongest cell among neighboring cells is less than or equal to the reception level threshold; the weak uplink coverage MR indicates that a reception level value is less than or equal to a set reception level threshold after uplink power control compensation; the downlink interference MR indicates that a reception level of a downlink service cell is greater than a set reception level threshold, and downlink reception quality is a set reception quality value; the uplink interference MR indicates that an uplink reception level is greater than a set reception level threshold, and downlink reception quality is a set reception quality value; the poor downlink quality MR indicates that a reception level of a downlink service cell falls within a set range of reception levels, and downlink reception quality is a set reception quality value; and the poor uplink quality MR indicates that a reception level of an uplink service cell falls within a set range of reception levels, and downlink reception quality is a set reception quality value.

The thresholds may be set for the MR indicators according to actual situations. For example, in a specific office of the GSM network, the thresholds of the MR indicators may be set according to Table 2.

**Table 2**

| **Indicator** | **Description** |
|---|---|
| Weak downlink coverage MR | A reception level value of a downlink service cell is less than or equal to -90 dBm after power control compensation, and a reception level of the strongest cell among neighboring cells is less than or equal to -90 dBm. |
| Weak uplink coverage MR | A reception level value after uplink power control compensation is less than or equal to -100 dBm. |
| Downlink interference MR | A reception level of a downlink service cell is greater than -80 dBm, and downlink reception quality is 5, 6, and 7. |
| Uplink interference MR | An uplink reception level is greater than -85 dBm, and downlink reception quality is 5, 6, and 7. |
| Poor downlink quality MR | A reception level of a downlink service cell falls within a range of (-90, -80] (dBm), and downlink reception quality is 6 and 7. |
| Poor uplink quality MR | An uplink reception level falls within a range of (-100, -85] (dBm), and downlink reception quality is 6 and 7. |

Furthermore, this embodiment may also include the following step:
Step 104: According to the location result, collect statistics on the number of times of the KQI exception event, the cause type and the number of times of the KQI exception event, and the corresponding MR indicators on a basis of multiple dimensions and multiple levels, and perform closed-loop processing.

Statistics are collocated on the number of times of the KQI exception event, the cause type and the number of times of the KQI exception event, and the corresponding MR indicators from the perspective of the four dimensions of the coverage category, the access category, the retention category, and the voice quality category and four levels of a cell level, a subscriber group level, a subscriber level, and a grid level, and then closed-loop processing is performed on the KQI exception event for which statistics are collected at the cell level, or closed-loop processing is performed on the KQI exception event for which statistics are collected at the subscriber group or subscriber level.

For example, to solve the network problem of a cell which most affects perception of subscribers, statistics are collected at the cell level on the number of times of the KQI exception event, the cause type and the number of times of the KQI exception event, and the corresponding MR indicators from the perspective of the four dimensions of the coverage category, the access category, the retention category, and the voice quality category, that is, statistics are collected on the number of times of the KQI exception event, all the cause types of the KQI exception event, the number of times for various cause types of the KQI exception event, and the corresponding MR indicators from the perspective of the four dimensions in the cell, and then closed-loop processing is performed according to the cause types of the KQI exception event. If no cause of the problem is found, statistics are further collected at the subscriber level or the grid level. For a KQI exception event resulting from a non-air interface cause, closed-loop processing may be performed specifically for all kinds of exception problems by using existing optimization methods, according to a cause type (such as an equipment cause, a core network cause, and resource congestion). For a KQI exception event resulting from an air interface cause, based on conditions of the air interface cause and the MR indicators, if interference is the main problem, closed-loop processing may be performed for the interference problem by using existing interference filtering methods; while if coverage is the main problem, the closed-loop processing is performed for the problem by using solutions to coverage problems in the existing optimization methods.

Alternatively, to solve the network problem of a subscriber group (for example, a VIP subscriber group or a subscriber group with extremely poor perception) or a subscriber, a main cell which affects KQI indicators of the subscriber group or the subscriber should be determined first; if the cell falls within TOPN cells, the closed-loop processing is performed on the cell, where the TOPN cells are N cells in which the KQI exception event occurs for the greatest number of times. If the cell does not fall within the TOPN cells, or the KQI exception event of the subscriber group or the subscriber is not a closed-loop after the closed-loop processing is performed on the cell, statistics collection at the subscriber group level, the subscriber level or the grid level is performed on the KQI exception event, the cause type and the number of times of the KQI exception event, and the corresponding MR indicators from the perspective of the four dimensions of the coverage category, the access category, the retention category, and the voice quality category, and the closed-loop processing is performed based on an actual geographic location of the subscriber and the cause of the KQI exception event.

With the method for network problem location based on subscriber perception provided in the embodiment of the present invention, the problem is solved in which the conventional KPI-based optimization method fails to solve a problem from the perspective of actual subscriber perception, effective location of a KQI exception event, determination of an air interface cause and a non-air interface cause, and location of types of the air interface cause are implemented, thereby solving the problem of low efficiency of the prior art in which a lot of human and material resources are required to filter causes of the network problem one by one, and further specifically performing closed-loop processing for the located network problem.

### Another embodiment:

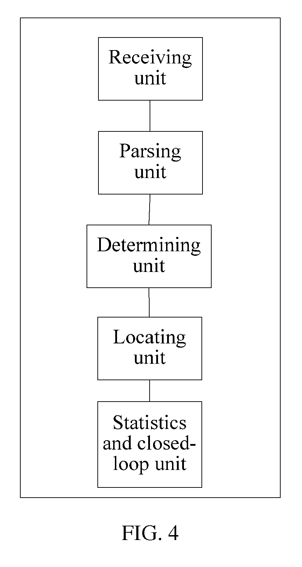

As shown in FIG. 4, based on the foregoing method embodiment, an embodiment of the present invention further provides an apparatus for network problem location based on subscriber perception, including:
a receiving unit, configured to receive, by a server, a call history record CHR log sent by a network management system;
a parsing unit, configured to parse the CHR log;
a determining unit, configured to determine, according to a parsing result, whether a call of a subscriber is a KQI exception event; and
a locating unit, configured to locate a location and a cause of the KQI exception event.

The call refers to a single call of a single subscriber in all base station controllers BSCs or part of the BSCs in the whole network.

The receiving and parsing, by the server, the call history record CHR log sent by the network management system refers to: from the perspective of any one or a combination of four dimensions of a coverage category, an access category, a retention category, and a voice quality category, extracting and analyzing key indicators in the CHR log, where if the call accords with any one or a combination of the key indicators, the call is determined as a KQI exception event.

The key indicators in the dimension of the coverage category are an uplink coverage exception and a downlink coverage exception;
the key indicators in the dimension of the access category are a caller access failure and a callee access failure;
the key indicators in the dimension of the retention category are a call drop before a conversation, a call drop after a conversation, and an on-hook due to poor quality; and
the key indicators in the dimension of the voice quality category includes an uplink/downlink high quality index HQI exception, an uplink voice quality indicator VQI exception, and an uplink/downlink one-way audio, an uplink/downlink crosstalk, and a frequent handover exception.

The locating the location and the cause of the KQI exception event refers to: locating a location where the KQI exception event occurs from a single dimension of the four dimensions of the coverage category, the access category, the retention category, and the voice quality category, and analyzing a cause of the KQI exception event in the single dimension, differentiating an air interface cause and a non-air interface cause, and locating the air interface cause.

Furthermore, the apparatus further includes a statistics and closed-loop unit, configured to collect, according to a location result, statistics on the number of times of the KQI exception event, the cause type and the number of times of the KQI exception event, and the corresponding MR indicators on a basis of multiple dimensions and multiple levels, and perform closed-loop processing according to the cause type of the KQI exception event.

It can be clearly learned by persons skilled in the art that, to achieve the purpose of convenient and brief description, for a detailed working process of the foregoing apparatus and units, reference may be made to the corresponding process in the method embodiment, and the details are not described herein again.

In the embodiments provided in the present invention, it should be understood that the disclosed apparatus and method may be implemented in other modes. For example, the described apparatus embodiments are merely exemplary. For example, the unit division is merely logical function division and can be other division in actual implementation. For example, multiple units or components can be combined or integrated into another system, or some features can be ignored or not performed. In addition, the displayed or discussed mutual couplings or direct couplings or communication connections are implemented through some interfaces. The indirect couplings or communication connections between the apparatuses or units may be implemented in electronic, mechanical or other forms.

The units described as separate parts may or may not be physically separate, and parts displayed as units may or may not be physical units, may be located in one position, or may be distributed on multiple network units. A part or all of the units may be selected according to the actual needs to achieve the objectives of the solutions of the embodiments.

In addition, functional units in the embodiments of the present invention may be integrated into a processing unit, or each of the units may exist alone physically, or two or more units are integrated into a unit. The integrated unit may be implemented in a form of hardware, or may be implemented in a form of a software functional unit.

When being implemented in the form of a software functional unit and sold or used as a separate product, the integrated unit may be stored in a computer-readable storage medium. Based on such understanding, the technical solutions of the present invention essentially, or the part contributing to the prior art, or all or a part of the technical solutions may be implemented in the form of a software product. The computer software product is stored in a storage medium and includes several instructions for instructing a computer device (which may be a personal computer, a server, or a network device) to execute all or a part of the methods described in the embodiments of the present invention. The storage medium includes: any medium that can store program codes, such as a U-disk, a removable hard disk, a read-only memory (ROM, Read-Only Memory), a random access memory (RAM, Random Access Memory), a magnetic disk, or an optical disk.

Only preferred embodiments of the present invention are described above, which enable persons skilled in the art to understand or implement the present invention. Various modifications of the embodiments are apparent to persons of ordinary skill in the art, and general principles defined in the specification can be implemented in other embodiments without departing from the spirit or scope of the present invention. Therefore, the present invention will not be limited to the embodiments described in the document but extends to the widest scope that complies with the principle and novelty disclosed in the document.

## Claims

1. A method for network problem location based on subscriber perception, comprising:
receiving and parsing, by a server, a call history record CHR log sent by a network management system;
determining, according to a parsing result, whether a call of a subscriber is a key quality indicator KQI exception event; and
locating a location and a cause of the occurrence of the KQI exception event.

2. The method according to claim 1, wherein the call is a single call of a single subscriber in all base station controllers BSCs or part of the BSCs in the whole network.

3. The method according to claim 2, wherein the receiving and parsing, by the server, the call history record CHR log sent by the network management system specifically comprises:
extracting and analyzing key indicators in the CHR log from a perspective of any one or a combination of four dimensions of a coverage category, an access category, a retention category, and a voice quality category.

4. The method according to claim 3, wherein the key indicators specifically are that:
the key indicators in the dimension of the coverage category comprise an uplink coverage exception and a downlink coverage exception;
the key indicators in the dimension of the access category comprise a caller access failure and a callee access failure;
the key indicators in the dimension of the retention category comprise a call drop before a conversation, a call drop after a conversation, and an on-hook due to poor quality; and
the key indicators in the dimension of the voice quality category comprise an uplink/downlink high quality index HQI exception, an uplink voice quality indicator VQI exception, and an uplink/downlink one-way audio, an uplink/downlink crosstalk, and a frequent handover exception.

5. The method according to claim 4, wherein the determining, according to a parsing result, whether a call of a subscriber is a key quality indicator KQI exception event comprises that:
if the call accords with any one of the key indicators, the call is the KQI exception event.

6. The method according to claim 5, wherein the uplink coverage exception refers to an exception in which an access level of a call is less than a set uplink level threshold, or an average uplink reception level of a call is less than a set uplink level threshold;
the downlink coverage exception refers to an exception in which an average downlink reception level of a call is less than a set downlink level threshold;
the caller access failure refers to an access failure not resulting from subscriber behavior or a peer end cause, in which a call of a caller does not receive an ALERTING message;
the callee access failure refers to an access failure not resulting from subscriber behavior or a peer end cause, in which a call of a callee does not receive an ALERTING message;
the call drop before a conversation refers to a call drop in which a call set-up result is "disconnect before connect acknowledge" and the call set-up failure is not caused by a subscriber behavior exception;
the call drop after a conversation refers to a call drop in which a call set-up is successful, a call completion result is receiving a DISCONNECT message, and the failure is not resulting from subscriber behavior or a peer end cause;
the on-hook due to poor quality refers to an on-hook in which the call is completed normally from a perspective of signaling, but there is no measurement report within N seconds before a channel is released, or average uplink/downlink quality is greater than a set reception quality threshold within the last M seconds;
the uplink/downlink HQI exception refers to an exception in which a proportion of terminal measurement reports MRs with high uplink/downlink reception quality of a call is lower than a set proportion threshold of good reception quality;
the uplink VQI exception refers to an exception in which an average uplink VQI of a call is lower than a set low VQI threshold, or a proportion of a duration with excessively low uplink VQI of a call to a total call duration is higher than a set proportion threshold of a low VQI duration;
the uplink/downlink one-way audio refers to an exception in which a one-way call record of a call exists in the CHR;
the uplink/downlink crosstalk refers to an exception in which a crosstalk call record of a call exists in the CHR; and
the frequent handover exception refers to an exception in which the number of handover times is great and exceeds a set threshold of the number of frequent handover times in a conversation of a call, and an average interval of handovers is short and less than a set threshold of the minimum interval of frequent handovers.

7. The method according to claim 3, wherein the locating a location and a cause of the KQI exception event specifically comprises:
locating a location where the KQI exception event occurs from a perspective of a single dimension of the four dimensions of the coverage category, the access category, the retention category, and the voice quality category, and locating a cause for which the KQI exception event in the single dimension occurs.

8. The method according to claim 7, wherein the location where the KQI exception event occurs is specifically a cell or a geographic longitude and latitude where the KQI exception event occurs.

9. The method according to claim 8, wherein locating the cell where the KQI exception event in the single dimension occurs specifically comprises:
that the KQI exception event in the dimensions of the access category and the retention category occurs in a call release cell;
in the dimension of the coverage category, if the KQI exception event is an uplink coverage exception, analyzing MR information in all cells where the KQI exception event occurs, wherein if an average uplink reception level of the KQI exception event in a cell is less than a set uplink level threshold, it is considered that an uplink coverage exception occurs in the cell during the KQI exception event;
or, if the KQI exception event is a downlink coverage exception, analyzing MR information in all cells where the KQI exception event occurs, wherein if an average downlink reception level of the KQI exception event in a cell is less than a set downlink level threshold, it is considered that a downlink coverage exception occurs in the cell during the KQI exception event; and
in the dimension of the voice quality category, if the KQI exception event is an uplink/downlink one-way audio or an uplink/downlink crosstalk, that the KQI exception event occurs in a call release cell;
or, if the KQI exception event is an uplink/downlink HQI exception, analyzing MR information in all cells where the KQI exception event occurs, wherein, for the KQI exception event, if a proportion of MRs with high uplink/downlink reception quality in a cell is lower than a set proportion threshold of good reception quality, it is considered that an uplink/downlink HQI exception occurs in the cell during the KQI exception event;
or, if the KQI exception event is an uplink VQI exception, analyzing MR information in all cells where the KQI exception event occurs, wherein, if an average uplink VQI of the KQI exception event in a cell is lower than a set low VQI threshold, or a proportion of a duration with an excessively low uplink VQI to a duration of a call in the cell is higher than the set proportion threshold of a low VQI duration, it is considered that an uplink VQI exception occurs in the cell during the KQI exception event.

10. The method according to claim 7, wherein the locating a cause for which the KQI exception event in the single dimension occurs specifically comprises:
determining a cause type of the KQI exception event in the single dimension, differentiating an air interface cause and a non-air interface cause, and locating an air interface cause of the KQI exception event.

11. The method according to claim 10, wherein the determining the cause type of the KQI exception event in the single dimension and differentiating the air interface cause and the non-air interface cause specifically comprises:
in the dimensions of the access category and the retention category, performing the determination based on a fail cause Fail Cause of a call set-up failure or a call release failure reported in the signaling output in the CHR, wherein the fail cause is stipulated in a protocol; and
in the dimension of the voice quality category, performing the determination according to a key indicator type with which the KQI exception event accords.

12. The method according to claim 10, wherein the locating an air interface cause of the KQI exception event specifically comprises:
analyzing all MR indicators of the KQI exception event, and determining the air interface cause of the KQI exception event according to an analysis result.

13. The method according to claim 12, wherein the MR indicators comprise:
a weak downlink coverage MR, a weak uplink coverage MR, a downlink interference MR, an uplink interference MR, a poor downlink quality MR, and a poor uplink quality MR.

14. The method according to claim 13, wherein the weak downlink coverage MR indicates that a reception level value of a downlink service cell is less than or equal to a set reception level threshold after power control compensation, and a reception level of the strongest cell among neighboring cells is less than or equal to the reception level threshold;
the weak uplink coverage MR indicates that a reception level value after uplink power control compensation is less than or equal to a set reception level threshold;
the downlink interference MR indicates that a reception level of a downlink service cell is greater than a set reception level threshold, and downlink reception quality is a set reception quality value;
the uplink interference MR indicates that an uplink reception level is greater than a set reception level threshold, and downlink reception quality is a set reception quality value;
the poor downlink quality MR indicates that a reception level of a downlink service cell falls within a set range of reception levels, and downlink reception quality is a set reception quality value; and
the poor uplink quality MR indicates that a reception level of an uplink service cell falls within a set range of reception levels, and downlink reception quality is a set reception quality value.

15. The method according to claim 14, wherein an air interface cause corresponding to the weak downlink coverage MR is weak downlink coverage;
an air interface cause corresponding to the weak uplink coverage MR is weak uplink coverage;
an air interface cause corresponding to the downlink interference MR is downlink interference;
an air interface cause corresponding to the uplink interference MR is uplink interference;
an air interface cause corresponding to the poor downlink quality MR is poor downlink quality; and
an air interface cause corresponding to the poor uplink quality MR is poor uplink quality.

16. The method according to claim 3, further comprising the following step:
after the location and the cause of the KQI exception event are located, collecting, according to a location result, statistics on the number of times of the KQI exception event, the cause type and the number of times of the KQI exception event, and corresponding MR indicators on a basis of multiple dimensions and multiple levels.

17. The method according to claim 16, wherein the multiple dimensions are the four dimensions of a coverage category, an access category, a retention category, and a voice quality category; and
the multiple levels are a cell level, a subscriber group level, a subscriber level, and a grid level.

18. The method according to claim 17, further comprising the following step:
performing closed-loop processing according to the cause type of the KQI exception event after statistics collection at the cell level is performed on the number of times of the KQI exception event, the cause type and the number of times of the KQI exception event, and the corresponding MR indicators from a perspective of the four dimensions of the coverage category, the access category, the retention category, and the voice quality category.

19. The method according to claim 18, further comprising the following step:
after statistics collection at the subscriber group level or the subscriber level is performed on the number of times of the KQI exception event, the cause type and the number of times of the KQI exception event, and the corresponding MR indicators from the perspective of the four dimensions of the coverage category, the access category, the retention category, and the voice quality category, determining a main cell which affects KQI indicators of a subscriber group or a subscriber, and if the cell falls within TOPN cells, performing the closed-loop processing on the cell.

20. The method according to claim 19, wherein the TOPN cells are N cells in which the KQI exception event occurs for the greatest number of times.

21. The method according to claim 19, further comprising the following step:
after the main cell which affects the KQI indicators of the subscriber group or the subscriber is determined, if the cell does not fall within the TOPN cells, or the KQI exception event of the subscriber group or the subscriber is not a closed-loop after the closed-loop processing is performed on the cell, collecting statistics at the grid level on the number of times of the KQI exception event, the cause type and the number of times of the KQI exception event, and the corresponding MR indicators from the perspective of the four dimensions of the coverage category, the access category, the retention category, and the voice quality category, and performing the closed-loop processing based on an actual geographic location of the subscriber and the cause type of the KQI exception event.

22. A network problem location and optimization apparatus based on subscriber perception, comprising:
a receiving unit, configured to receive, by a server, a call history record CHR log sent by a network management system;
a parsing unit, configured to parse the CHR log;
a determining unit, configured to determine, according to a parsing result, whether a call of a subscriber is a KQI exception event; and
a locating unit, configured to locate a location and a cause of the occurrence of the KQI exception event.

23. The apparatus according to claim 22, further comprising a statistics and closed-loop unit, configured to collect, according to a location result, statistics on the number of times of the KQI exception event, a cause type and the number of times of the KQI exception event, and corresponding MR indicators on a basis of multiple dimensions and multiple levels, and perform closed-loop processing according to the cause type of the KQI exception event.
